Europäisches Patentamt

European Patent Office

Office européen des brevets

(19)

(11) Veröffentlichungsnummer : **0 356 388 B1**

(12) **EUROPÄISCHE PATENTSCHRIFT**

(45) Veröffentlichungstag der Patentschrift :
**19.11.92 Patentblatt 92/47**

(51) Int. Cl.$^5$ : **F26B 3/00,** F26B 21/02,
F26B 23/00, F26B 17/00

(21) Anmeldenummer : **89810601.8**

(22) Anmeldetag : **11.08.89**

(54) Verfahren und Vorrichtung zum Entwässern von wasserhaltigen Massen.

(30) Priorität : **22.08.88 CH 3113/88**

(43) Veröffentlichungstag der Anmeldung :
**28.02.90 Patentblatt 90/09**

(45) Bekanntmachung des Hinweises auf die
Patenterteilung :
**19.11.92 Patentblatt 92/47**

(84) Benannte Vertragsstaaten :
**AT CH DE FR IT LI**

(56) Entgegenhaltungen :
BE-A- 453 654
CH-A- 585 379
DE-A- 3 013 703
DE-A- 3 221 602

(56) Entgegenhaltungen :
DE-C- 89 238
DE-C- 192 959
GB-A- 103 521
GB-A- 689 244
US-A- 4 763 572

(73) Patentinhaber : **Baer, Robert**
**Wohlenstrasse 47**
**CH-3043 Uettligen (CH)**

(72) Erfinder : **Baer, Robert**
**Wohlenstrasse 47**
**CH-3043 Uettligen (CH)**

(74) Vertreter : **Mohnhaupt, Dietrich et al**
**AMMANN PATENTANWAELTE AG BERN**
**Schwarztorstrasse 31**
**CH-3001 Bern (CH)**

## Beschreibung

Die vorliegende Erfindung betrifft ein Verfahren und eine Vorrichtung zum Entwässern von wasserhaltigen Massen in Form von Feststoffsuspensionen oder wasserhaltigen Feststoffteilchen, insbesondere von Suspensionen von teilchenförmigen Feststoffen, mittels Trockenluft. Solche Suspensionen sind bevorzugt, jedoch nicht ausschliesslich Schlämme, die aus Kläranlagen anfallen. Es kann sich auch um Schlämme aus anorganischen Feststoffen handeln, wie z.B. calciumsulfat- und calciumnitrathaltige Schlämme aus der nassen Rauchgasreinigung von thermischen Kraftwerken. Als andere wasserhaltige Feststoffe, die zu trocknen sind, seien beispielsweise Sägespäne, Rindenstücke, stückige Obstschalen usw. genannt.

Bei vielen industriellen Verfahren fallen feststoffhaltige, wässerige Suspensionen an, die aus Gründen des Umweltschutzes nicht als solche deponiert werden können. Als Dünger in der Landwirtschaft sind sie wegen ihren anorganischen Verunreinigungen nicht zu brauchen. Es stellt sich hier die Aufgabe, diese Schlämme zu entwässern, und zwar zumindest soweit, dass die Konzentrate bzw. Trockenprodukte deponiefähig werden, verbrannt werden können oder sonstwie einer Verwertung oder Weiterverarbeitung zugeführt werden können. Ausserdem soll die Entwässerung oder die Trocknung der im allgemeinen wertlosen Schlämme so wenig wie möglich kosten.

Bisher hat man die bekannte, mit heisser Luft oder durch starkes Aufheizen der wasserhaltigen Massen bewirkte Hochtemperaturtrocknung angewandt, die aber ausserordentlich energieintensiv ist und hohe Kosten verursacht. Bei dieser Trocknungsart und bei der langsamen, mit Kraftwerkabwärme arbeitenden Niedertemperaturtrocknung treten zusätzlich unzumutbare Geruchsbelästigungen auf.

In letzterem Fall müssen zudem die grossen Mengen an wasserhaltigen Massen in die Nähe der Kraftwerke transportiert werden.

Die Erfindung stellt sich die Aufgabe, ein neues Verfahren und eine bevorzugte Vorrichtung zu dessen Verwirklichung zu schaffen, das die genannten Nachteile nicht aufweist und bei geringstem Energieverbrauch besonders umweltfreundlich ist.

Bekannt ist aus der GB-A-103,521 eine Anlage zum Entfeuchten von Schlamm, Kopra und dergleichen. Das Material wird darin in Schlangenlinien fortbewegt und kann auch einem getrockneten und vorgewärmten Luftstrom ausgesetzt werden, der im wesentlichen entgegen der Bewegung des Materials geleitet wird. Die Luft wird dabei direkt von ausserhalb der Anlage angesaugt und ebenso auch wieder ins Freie abgelassen.

Die Schweizer Patentschrift CH-A5-585,379 beschreibt ein Verfahren zur Holztrocknung mittels getrockneter und erwärmter Luft. Dabei wird die Luft in einer ersten Stufe in einem geschlossenen Kreislauf geführt und durch eine Wärmepumpe die Feuchtigkeit entzogen und in einem zweiten Schritt die Luft erwärmt und Frischluft zugeführt bzw. Luft abgelassen.

Das erfindungsgemässe Verfahren zum trocknenden Entwässern einer wasserhaltigen Masse in Form von Feststoffsuspensionen oder wasserhaltigen Feststoffteilchen mittels Trockenluft in einer Trockenvorrichtung ist im unabhängigen Patentanspruch 1 definiert. Besondere Ausführungsformen bilden den Gegenstand der davon abhängigen Ansprüche.

Zunächst wird die wasserhaltige Masse, beispielsweise ein Klärschlamm mit 10 bis 40 Gew.-% Feststoffen, Rest Wasser, in die Trockenvorrichtung eingespeist und dort zu einer dünnen Schicht ausgebreitet. Diese Schicht wird nun im wesentlichen horizontal durch einen Vortrockner transportiert, während auf die Oberfläche der Masse bereits feuchte, aber noch nicht mit Wasser gesättigte Luft aufgeblasen wird. Um den Vortrockner nicht zu lang zu machen, überführt man die Masse zwei - oder mehrmals in darunterliegende Böden, breitet sie jedesmal wieder in dünner Schicht aus und bläst die Vortrockenluft wieder auf. Die Masse kann auf den einzelnen Böden absatzweise oder kontinuierlich bewegt werden. Dies wird fortgesetzt, bis die Masse so viel Wasser verloren hat, dass sie krümelig ist. Dann gelangt sie, zu einem Haufwerk gesammelt, in einen bevorzugt darunterliegenden Nachtrockner, in den von unten durch das Haufwerk warme, trockene Luft geleitet wird. Dabei wird das Haufwerk absatzweise oder kontinuierlich umgewälzt, bevorzugt derart, dass die nun weitgehend wasserfreien Anteile in Richtung einer Austragsöffnung bewegt werden. Die aus dem Nachtrockner abströmende Luft, die noch Wasser aufnehmen kann, gelangt in den Vortrockner.

Die Trockenluft strömt beim erfindungsgemässen Verfahren im Kreislauf. Sie gelangt warm und trocken zum Nachtrockner und durchströmt das darin befindliche Produkt, trocknet dort das vorgetrocknete Haufwerk auf den gewünschten Endwassergehalt und wird dann in den Vortrockner überführt. Dort belädt sie sich beim Ueberstreichen der Materialschicht auf den Ausbreitungsböden mit Wasser. Im Vortrockner kann die Luft im Kreuzstrom zu den einzelnen Böden mit ausgebreiteter Masse geführt oder gleichzeitig allen Böden zugeführt werden. Die abströmende Luft, die feucht ist und sich bei der Wasseraufnahme abgekühlt hat, gelangt nun zum Verdampfer der Kältemaschine, wo sie weiter abgekühlt wird und den grössten Teil des in ihr enthaltenen Wasserdampfes durch Kondensation verliert. Das Verfahren wird bevorzugt so geführt, dass sich auf den Kühlflächen des Verdampfers höchstens vorübergehend Reif bildet und das Wasser flüssig abgeschieden wird. Es kann ins Freie geleitet werden.

Nach Verlassen des Verdampfers durchströmt die getrocknete, kalte Luft den Kondensator der gleichen Kältemaschine und wird aufgeheizt. Gleichzeitig wird der Kondensator gekühlt. Die Kühlung des Kältemittels durch die zirkulierende Luft reicht nicht aus und wird durch einen Wasserkreislauf vervollständigt, der in Einzelheiten noch beschrieben wird. Die in diesem Wasserkreislauf anfallende Prozesswärme wird zur Erwärmung der wasserhaltigen Masse auf den Böden des Vortrockners benutzt, was dieses energiearme Trockenverfahren ermöglicht. Die warme, trockene, vom Kondensator abströmende Luft wird mittels eines Umluftgebläses in den Nachtrockner geleitet und im geschlossenen Kreislauf gehalten. Es wird also weder Luft zugeführt noch abgeführt.

Die Erfindung betrifft weiterhin eine Vorrichtung zur Ausführung des erfindungsgemässen Verfahrens, die im zweiten unabhängigen Patentanspruch definiert ist. Sie soll nun an Hand eines Beispiels, das die Erfindung nicht einschränkt, und der Zeichnung näher erläutert werden.

In der Zeichnung stellen dar:

FIG. 1 einen Längsschnitt der erfindungsgemässen Entwässerungsvorrichtung;

FIG. 2 einen Querschnitt entlang der Linie II-II in Fig. 1 und

FIG. 3 einen stark vergrösserten Ausschnitt aus Fig. 2.

Alle Figuren sind schematisch gezeichnet. Alle Teile der erfindungsgemässen Trockenvorrichtung sind in einer vollständig geschlossenen, grossen Kammer 10 untergebracht. Diese kann in Modularbauweise aufgebaut sein. Es sind als Baugruppen ein Vortrockner 12, ein Nachtrockner 14, ein Luftentfeuchter 16 und eine Umlaufgebläsekammer 18 zu sehen.

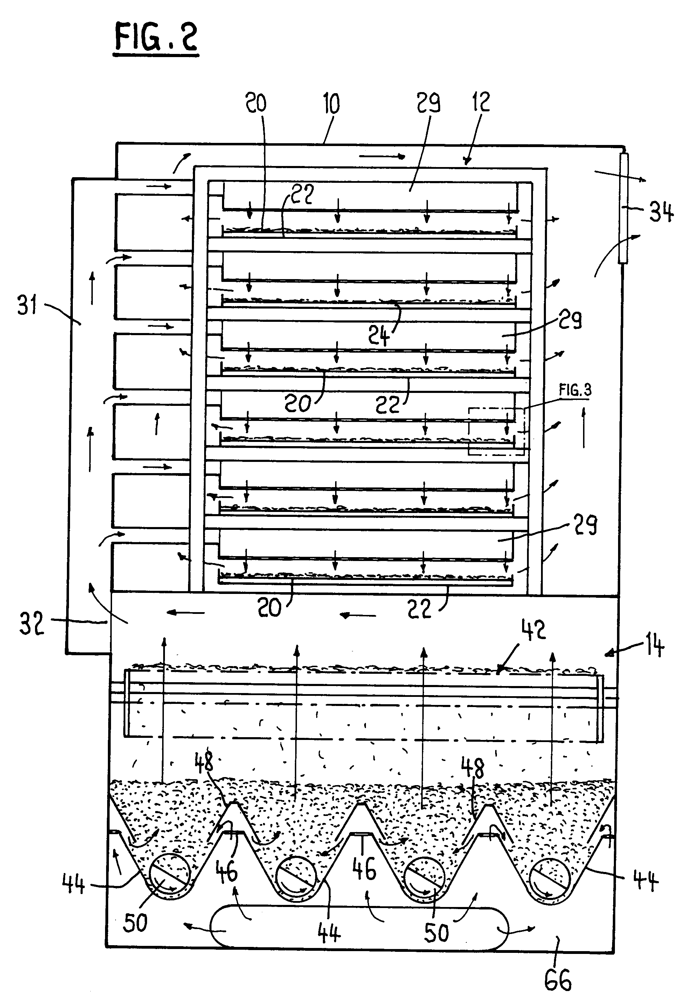

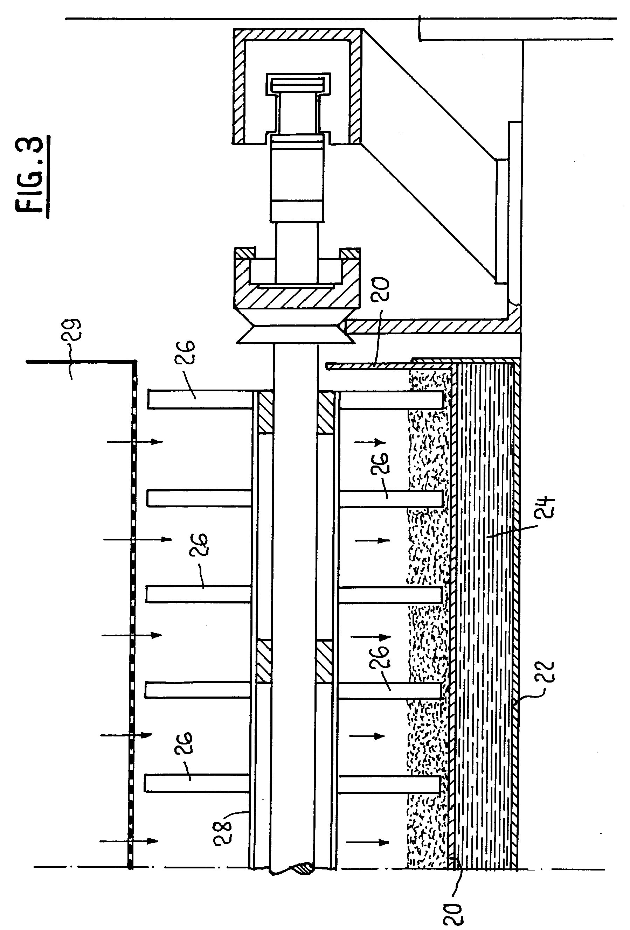

Im Vortrockner 12 sind mehrere trogförmige Böden 20 horizontal und übereinander sowie an den Enden gegeneinander versetzt angeordnet, unter denen sich jeweils ein weiterer, dicht mit dem Boden 20 verbundener Unterboden 22 befindet, so dass ein kastenförmiger Hohlraum 24 gebildet wird (Fig. 3). In jedem Boden 20 laufen die Finger 26 eines an sich bekannten Kratzförderbandes 28 (das in Fig. 2 der Klarheit halber nicht dargestellt ist), das am stirnseitigen Ende jedes Bodens 20 über Umlenk- und Antriebswalzen 30 geführt ist. Die zugehörigen Antriebseinrichtungen sind nicht dargestellt. Die Anordnung ist so getroffen, dass doppeltwirkende Kratzfinger 26 vorgesehen sind, und dass der gleiche Kratzförderer mit zwei benachbarten Böden 20 zusammenwirkt, wobei der eine Boden von links nach rechts und der andere Boden von rechts nach links bestrichen wird.

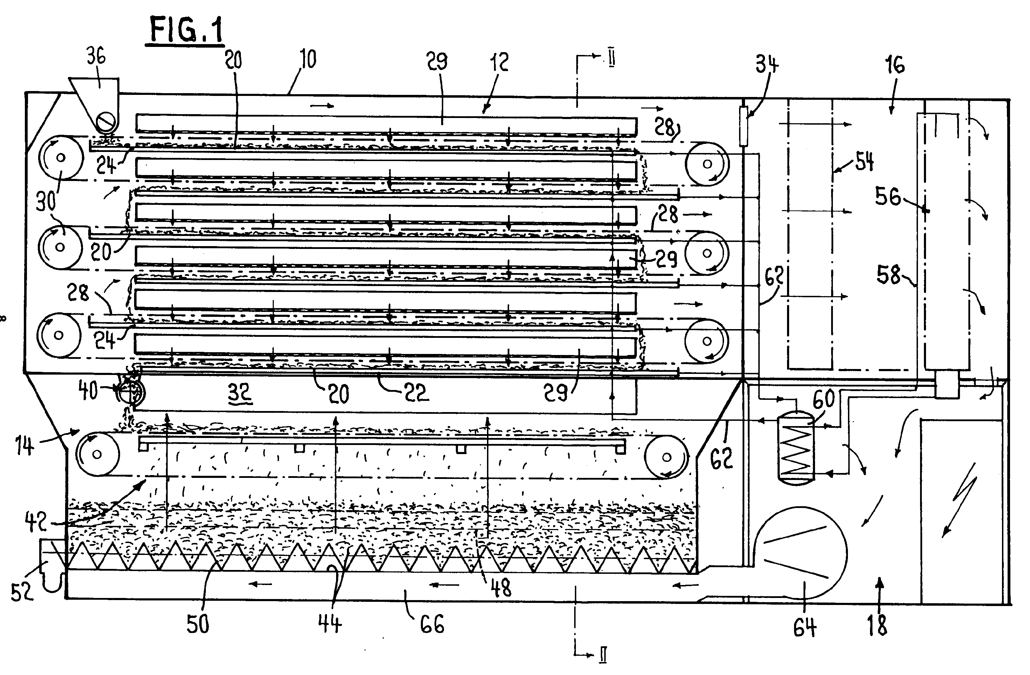

Ueber jedem Boden 20 sind Luftführungs- und Blaskanäle 29 angeordnet, die die Böden 20 teilweise oder vollständig abdecken. Alle Kanäle 29 sind an eine Sammelleitung 31 (Fig. 2) angeschlossen, die an ihrem unteren Teil 32 mit dem Nachtrockner 14 verbunden ist. Mit 34 ist schematisch der Luftaustritt aus dem Vortrockner 12 bezeichnet, der normalerweise senkrecht zur Zeichenebene in Fig. 2 liegt (vgl. Fig. 1). Oben am Vortrockner 12 befindet sich eine Aufgabeeinrichtung 36 für die zu trocknenden Massen.

Der Vortrockner 12 ist weiterhin mit dem Nachtrockner 14 durch eine Produktschleuse in Form eines Zellenrades 40 verbunden. Im Nachtrockner ist eine Verteilvorrichtung 42 angeordnet, die luftdurchlässig ist und aufgegebenes Produkt von der Schleuse 40 nach rechts fördert. Unter der Verteilvorrichtung sind eine oder mehrere Horizontalmulden 44 eingebaut, die mit seitlichem Abstand parallel liegen. Die dadurch gebildeten Längsschlitze 46 sind durch Hauben 48 im Abstand abgedeckt. In jeder Mulde 44 läuft eine Förderschnecke 50 mit nicht dargestelltem Antrieb, die das trockene Produkt zum Austrag 52 bewegt.

Seitlich vom Vortrockner 12 oder in räumlich getrennter Anordnung ist der Lufttrockner 16 vorgesehen. Es ist dies eine Kammer, in der ein Verdampfer 54 und ein zum gleichen Kühlmittelkreislauf gehörender Kondensator 56 einer Kältemaschine hintereinander, im Luftstrom gesehen, eingebaut sind. Der Kondensator 52 besitzt ausserdem einen Kühlwasserkreislauf 58, der mit dem Wärmetauscher 60 verbunden ist. Der Wärmetauscher 60 braucht nicht in der Gebläsekammer 18 angeordnet zu sein.

Der Sekundarkreislauf 62 des Wärmetauschers 60 steht mit den Kastenhohlräumen 24 des Vortrockners in Verbindung. Die Zirkulationspumpen und der Kompressor der Kältemaschine sind nicht dargestellt.

Der in der Ventilatorkammer 18 befindliche, schematisch dargestellte Ventilator 64 beliebiger Bauart steht auf der Saugseite mit dem Raum hinter dem Kondensator 56 und auf der Druckseite mit dem Raum 66 unterhalb der Mulden 44 in Verbindung.

Die Vorrichtung arbeitet folgendermassen:

Durch die Zufuhreinrichtung 36, die gegen die Atmosphäre abgedichtet ist, wird die wasserhaltige Masse eingetragen und auf den obersten Boden 20 des Vortrockners 12 gegeben. Es handelt sich beispielsweise um einen Klärschlamm mit etwa 35 Gew.-% Trockensubstanz. Durch den Kratzförderer 28 wird der Schlamm zunächst auf dem obersten Boden 20 verteilt, in dünner Schicht ausgebreitet, umgewälzt und langsam gegen das rechte Ende des Bodens bewegt. Gleichzeitig wird vom obersten Luftkanal 29 Luft auf die Oberseite der Schlammschicht geblasen. Diese Luft wird aus dem Nachtrockner 14 durch den Sammelkanal 31 herangeführt und ist noch wasserdampfaufnahmefähig.

Am Ende des obersten Bodens 20 fällt der Schlamm auf den darunter befindlichen Boden 20, wo er vom Unterzug des gleichen Kratzförderers wie oben bearbeitet, aber in Gegenrichtung bewegt wird. Der Trockenvorgang ist der gleiche wie beschrieben. Regel mit dem Wasser im Verdampfer 54 und gelangen mit dem Kondensat nach aussen. Dort kann das Kondensat, wenn nötig, reinigend behandelt werden.

Im anschliessenden Kondensator 56 wird die Luft durch kondensierendes Kühlmittel erwärmt. Da aber die Wärmeleistung einer Kältemaschine stets grösser ist als deren Kälteleistung, muss zusätzliche Wärme abgeführt werden. Dies geschieht durch den beschriebenen Kühlwasserkreislauf (primär: 58, 60; sekundär: 62, 24, 60). Weitere Wärmemengen werden durch das Endprodukt und über Wärmeverluste aus der Anlage abgeführt; diese benötigt daher keine Wärmeisolation.

Man kann die Anlage mit konstantem Durchsatz, d.h. konstanter Produktion einer gleichbleibenden Menge an Trockengut pro Zeiteinheit, oder mit konstanter Trockenleistung, d.h. gleichbleibender Menge an kondensiertem Wasser pro Zeiteinheit, betreiben. Man kann beide Betriebsarten auf einen bestimmten Wassergehalt im Endprodukt fahren. Für jede Betriebsart sind die üblichen Mess- und Regelgeräte vorgesehen, die in der Zeichnung nicht dargestellt sind.

Ein Beispiel soll die enorme Energieersparnis des erfindungsgemässen Verfahrens zeigen.

In einer beschriebenen Vorrichtung wurden stündlich 500 kg Klärschlamm mit 35 Gew.-% Trockensubstanz auf einen Trockensubstanzgehalt von 90 Gew.-% getrocknet, das ist eine Masse, die sich absolut trocken anfühlt. Es fielen 195 kg davon sowie 305 kg Wasser pro Stunde an. Die benötigte Leistung beträgt 80 kW. Eine übliche thermische Trockenvorrichtung, hätte für die gleiche Trockenaufgabe eine Leistung von 192 kW zu erbringen. Die grosse Energieeinsparung der Erfindung ist offensichtlich.

Auf diese Weise wird das zu trocknende Gut schliesslich bis zum untersten Boden 20 gefördert, wobei es ständig von Luft beaufschlagt und getrocknet und vom Kratzförderer umgewälzt wird. Der Trockenvorgang wird durch das im Unterboden 24 (Fig. 3) umlaufende warme Wasser aus dem Wärmetauscher 60 unterstützt und beschleunigt. Das Wasser kühlt sich dabei ab und strömt dem Wärmetauscher 60 wieder zu.

Vom linken Ende des untersten Bodens 20, wo der Schlamm bereits rieselfähig, z.B. krümelig-trocken ist, fällt er auf das Zellenrad 40 und gelangt in den Nachtrockner 14, in den das Gebläse 64 warme, trockene Luft fördert. Die vorgetrocknete Masse wird beispielsweise durch die Verteilvorrichtung 42 nach rechts bewegt, während trockene Luft von unten hindurchgeleitet wird. Vom rechten Ende der Vorrichtung 42 fällt das Gut in die Mulden 44 und wird beispielsweise durch Schnecken 50 langsam nach links bewegt, wobei laufend warme, ganz trockene Luft von unten her durch das Gut geleitet wird. Sie strömt dabei zunächst durch die zwischen zwei Mulden 44 gebildeten Längsschlitze 46 (Fig. 2), die durch die Hauben 48 abgedeckt sind, und dann durch das Trockengut und die durchlässige Verteilvorrichtung 42.

Schliesslich wird das trockene Gut bei 52 kontinuierlich oder von Zeit zu Zeit ausgetragen.

Die Luft wird vom Ventilator oder Gebläse 64 im Gegenstrom zum Trockengut im Kreislauf umgewälzt. Wie schon erwähnt, wird im Verdampfer 54 eine starke Abkühlung der Luft mit Auskondensieren des grössten Teils des Wassers erzielt. Das kondensierte Wasser wird mit weniger als 30° durch eine nicht dargestellte Leitung aus der Trockenanlage abgelassen. Enthalten die zu trocknenden Stoffe ausser Wasser noch andere, flüchtige Bestandteile, beispielsweise Ammoniak, so reichern sich diese in der Trockenluft zunächst an; sie kondensieren in der Weiterhin unterbindet die Erfindung bisherige Geruchsbelästigungen der Umgebung. Die einzelnen Vorrichtungteile können getrennt transportiert, aufgestellt und betrieben werden. Jede Vorrichtung kann ohne weiteres an die Trockenaufgabe dimensions- und betriebsmässig angepasst werden.

Das erfindungsgemässe Verfahren lässt sich auf viele Ausgangsmaterialien anwenden, z.B. Klärschlamm, Schlämme aus Rauchgasreinigungsanlagen, Blut-Pansen-Gemisch aus Schlachthäusern zur Herstellung von Düngemitteln, Sägespänen, Obstschalen, Rindenstücke, nasses Getreide und viele andere.

Es lassen sich andere als Kratzförderer im Vortrockner verwenden, wo die Böden auch geneigt sein können. Die Umwälzung des Haufwerkes im Nachtrockner kann durch einen Schrägmischer erfolgen. Die überschüssige Wärme der Kältemaschine kann der Anlage entnommen und ausserhalb genutzt werden.

**Patentansprüche**

1. Verfahren zum trocknenden Entwässern einer wasserhaltigen Masse in Form von Feststoffsuspensionen oder wasserhaltigen Festkörperteilchen in einer Trockenvorrichtung, wobei man die wasserhaltige Masse in dünner Schicht ausbreitet und diese durch einen Vortrockner transportiert, auf die Oberflaeche dieser Schicht erwärmte wasseraufnahmefähige Luft im Kreuzstrom zum Trockengut aufbläst und die Masse dabei teilentwässert, dann die teilentwässerte Masse in einem Nachtrockner zu einem Haufwerk sammelt und dieses mit warmer, trockener Luft fertig entwässert, wobei das Haufwerk umgewälzt und schliesslich aus der Trockenvorrichtung ausgetragen wird, dadurch gekennzeichnet, dass man die Luft in der Trockenvorrichtung im geschlossenen Kreislauf führt, indem man die aus dem Vortrockner abströmende Luft durch einen Entfeuchter leitet, worin sie unter Wasserkondensation abgekühlt und dann wieder erwärmt wird, und dass man die trockene, erwärmte Luft dem Nachtrockner zuführt und dort durch das genannte Haufwerk hindurchleitet, wonach die vom Haufwerk abströmende Luft wieder in den Vortrockner gelangt.

2. Verfahren nach Anspruch 1, bei dem man die im Kreislauf geführte Luft im Verdampfer einer Kältemaschine mit Verdampfer und Kondensator abkühlt, wobei Wasser kondensiert, und die Prozessluft im Kondensator wieder erwärmt, dadurch gekennzeichnet, dass man die im Kondensator anfallende, überschüssige Prozesswärme der Kältemaschine zum Vorwärmen der wasserhaltigen Masse im Vortrockner verwendet.

3. Verfahren nach Anspruch 1 oder 2, dadurch gekennzeichnet, dass man die wasserhaltige Masse im Vortrockner in mehreren, untereinander liegenden Stufen waagerecht fördert.

4. Verfahren nach Anspruch 3, dadurch gekennzeichnet, dass die wasserhaltige Masse während der Förderung umgewälzt wird.

5. Verfahren nach Anspruch 1 oder 3, dadurch gekennzeichnet, dass die Dicke der dünnen Schicht etwa 1 bis 3 cm beträgt.

6. Verfahren nach einem der vorstehenden Ansprüche zum Trocknen von Klärschlamm, dadurch gekennzeichnet, dass man einen Klärschlamm mit 10 bis 40 Gew.-% Trockensubstanz zu einer Feststoffmasse mit 85 bis 90 Gew.-% Trockensubstanz trocknet.

7. Vorrichtung zur Ausführung des Verfahrens nach Anspruch 1 und 2, mit einem Vortrockner (12) mit abgedichteter Eintragsvorrichtung (36) für die wasserhaltige Masse und mit mindestens einem im wesentlichen horizontalen Trockenboden (20), über dem ein Lufteinblaskanal (29) angeordnet ist; mit einem Nachtrockner (14) mit Transportvorrichtungen (42; 50) für das vom Vortrockner kommende Trockengut, wobei unter der untersten Transportvorrichtung (50), die mit einer Produktaustragsvorrichtung (52) am Förderende verbunden ist, Lufteinblasschlitze (46) vorgesehen sind, um Trockenluft durch das Trockengut im Nachtrockner (14) zu leiten, gekennzeichnet durch eine Kältemaschine mit Verdampfer (54) und Kondensator (56), die in Luftstromrichtung hintereinander im vollen Luftstrom angeordnet sind, und ein Luftumwälzgebläse (64), wobei der Kondensator (56) zusätzlich mit Wasserkühlung versehen ist und das Kühlwasser im Primärkreislauf (58) durch einen Wärmetauscher (60) geführt wird, der einen Sekundärkreislauf (62) aufweist, der mit einem kastenförmigen Hohlraum (24) verbunden ist, welcher vom Trockenboden (20) und einem dicht mit diesem verbundenen Unterboden (22) gebildet ist.

8. Vorrichtung nach Anspruch 7, dadurch gekennzeichnet, dass das Umwälzgebläse (64) zwischen Kondensator (56) und Nachtrockner (14) eingebaut ist.

9. Vorrichtung nach Anspruch 7, dadurch gekennzeichnet, dass im Vortrockner (10) mehrere Trocknerböden (20) untereinander angeordnet sind.

10. Vorrichtung nach Anspruch 9, dadurch gekennzeichnet, dass je zwei Trocknerböden (20) mit ei-nem doppeltwirkenden Kratzförderer (28) zu-sammenwirken, dessen nach unten gerichtete Finger (26) des Oberzugs einen Trocknerboden und dessen Finger des Unterzugs nach Umlenken des Förderers den darunterliegenden Trocknerboden überstreichen.

11. Vorrichtung nach Anspruch 7, dadurch gekennzeichnet, dass zwischen Nachtrockner (12) und Vortrockner (14) eine Zellenradschleuse (40) eingebaut ist.

## Claims

1. A method for the drying dehydration of an aqueous substance in the form of a suspension of solids or of water containing solid particles in a drying installation where said aqueous substance is spread out in a thin layer which is transported through a preliminary dryer, a stream of water-absorbing air is transversely applied to said substance to be dried, whereby the substance is partly dehydrated, the partially dehydrated substance is subsequently collected in a second dryer in the form of a flowable material and is finally dehydrated by means of warm, dry air while being circulated, and finally discharged from said drying installation, characterized in that the air in said drying installation is circulated in a closed circuit by directing the air flowing out from said preliminary dryer to a dehumidifier where it is cooled under water condensation and then warmed up again, and in that the dry, warmed air is delivered to said second dryer and conveyed through said flowable material, whereupon the air from said flowable material is redirected to said preliminary dryer.

2. A method according to claim 1 where the air in said closed circuit is cooled in the evaporator of a refrigerator having an evaporator and a condenser, whereby water is condensed, and the process air is warmed up again in said condenser, characterized in that the excess process heat of said refrigerator developing in said condenser is used in order to prewarm said aqueous substance in the preliminary dryer.

3. A method according to claim 1 or 2, characterized in that said aqueous substance in the preliminary dryer is horizontally conveyed on several underlying planes.

4. A method according to claim 3, characterized in that said aqueous substance is circulated while being conveyed.

5. A method according to claim 1 or 3, characterized in that the thickness of said thin layer amounts to about 1 to 3 cm.

6. A method according to any one of the preceding claims for the drying of sewage sludge, characterized in that a sewage sludge having 10 to 40% in weight of dry substance is dried to form a solid substance having 85 to 90% in weight of dry substance.

7. A device for implementing the method according to claim 1 and 2, comprising a preliminary dryer (12) having a sealed supply device (36) for said aqueous substance and at least one substantially horizontal drying floor (20) with an air injection duct (29) disposed thereabove; further comprising a second dryer (14) having transport devices (42; 50) for the substance to be dried coming from said preliminary dryer, air injection slots (46) for passing drying air through the substance to be dried in the second dryer (14) being provided below the lowermost transporting device (50) which is connected to a product delivery device (52) at the end of the conveyor, characterized by a refrigerator having an evaporator (54) and a condenser (56) which are arranged in series in the full air stream, and an air circulating fan (64), said condenser (56) being additionally equipped with water cooling and the cooling water of the primary circuit being guided through a heat exchanger (60) which is provided with a secondary circuit (62) connected to a box-shaped cavity (24) formed by said drying floor (20) and a lower floor (22) which is tightly connected thereto.

8. A device according to claim 7, characterized in that said circulating fan (64) is mounted between said condenser (56) and said second dryer (14).

9. A device according to claim 7, characterized in that a plurality of drying floors (20) are arranged below each other in said preliminary dryer (12).

10. A device according to claim 9, characterized in that two of said drying floors (20) at a time cooperate with a respective double-action scratching conveyor (28) whose downwardly directed fingers (26) of the upper drawer pass over one drying floor while the fingers of its lower drawer pass over the underlying drying floor after reversal of said conveyor.

11. A device according to claim 7, characterized in that a cellular wheel sluice (40) is mounted between said second dryer (14) and said preliminary dryer (12).

**Revendications**

1. Procédé pour la déshydratation séchante d'une masse aqueuse sous forme de suspensions de matières solides ou de particules solides aqueux dans une installation de séchage où ladite masse aqueuse est répandue en couche mince et celle-ci est transportée à travers un présécheur, un courant d'air chauffé et capable d'absorber de l'eau est appliqué transversalement à la surface de cette couche pour déshydrater partiellement ladite masse, la masse partiellement déshydratée est ensuite recueuillie dans un séchoir final sous forme d'une matière coulante et définitivement déshydratée pendant que ladite matière coulante est circulée et finalement déchargée du séchoir, caractérisé en ce que l'air est circulé en circuit fermé en passant l'air qui s'échappe du présécheur par un déshumidificateur où il est refroidi sous condensation d'eau et ensuite réchauffé, et que l'air sec et réchauffé est amené au séchoir final et passé à travers ladite matière coulante, après quoi l'air qui s'échappe de la matière coulante est ramené au présécheur.

2. Procédé selon la revendication 1, où l'air circulant en circuit fermé est refroidi sous condensation d'eau dans l'évaporateur d'une machine frigorifique comprenant un évaporateur et un condenseur, et que l'air en cirulation est rechauffé dans le condenseur, caractérisé en ce que la chaleur excédentaire du procédé frigorifique se produisant dans le condenseur, est utilisée pour préchauffer la masse aqueuse dans le présécheur.

3. Procédé selon la revendication 1 ou 2, caractérisé en ce que la masse aqueuse dans le présécheur est horizontalement transporté en plusieurs étages disposés l'un sous l'autre.

4. Procédé selon la revendication 3, caractérisé en ce que la masse aqueuse est circulée pendant le transport.

5. Procédé selon la revendication 1 ou 3, caractérisé en ce que l'épaisseur de la couche mince est de 1 à 3 cm environ.

6. Procédé selon l'une quelconque des revendications précédentes, pour le séchage de boues de curage, caractérisé en ce que l'on sèche des boues de curage ayant 10 à 40% en poids de matière sèche jusqu'à obtenir une matière solide ayant 85 à 90% en poids de matière sèche.

7. Dispositif pour la mise en oeuvre du procédé selon la revendication 1 et 2, comprenant un présécheur (12) ayant un dispositif d'alimentation (36) de la masse aqueuse étanché et au moins un plancher de séchage (20) au-dessus duquel est disposé une conduite d'injection d'air; et comprenant un séchoir final (14) ayant des dispositifs de transport (42; 50) pour la matière à sécher provenant du présécheur, des fentes d'injection d'air (46) étant prévues sous le dispositif de transport (50) inférieur qui est relié à un dispositif de décharge du produit à l'extrémité du convoyeur, pour faire passer de l'air de séchage par la matière à sécher dans le séchoir final (14), caractérisé par une machine frigorifique comprenant un évaporateur (54) et un condenseur (56) disposés en série en plein courant d'air, ainsi qu'un ventilateur de circulation d'air (64), ledit condenseur (56) étant additionnellement refroidi à l'eau et l'eau de refroidissement du circuit primaire (58) étant passée par un échangeur de chaleur (60) pourvu d'un circuit secondaire (62) communiquant avec un espace en forme de caisson qui est formé par le plancher de séchage (20) et par un plancher inférieur (22) étanchement relié à celui-là.

8. Dispositif selon la revendication 7, caractérisé en ce que le ventilateur de circulation (64) est monté entre le condenseur (56) et le séchoir final (14).

9. Dispositif selon la revendication 7, caractérisé en ce que plusieurs planchers de séchage (20) sont disposés l'un sous l'autre dans le présécheur (12).

10. Dispositif selon la revendication 9, caractérisé en ce que deux planchers de séchage (20) coopèrent chaque fois avec un convoyeur-racleur (28) double dont les doigts (26) en regard vers le bas du trait supérieur passent sur un des planchers de séchage, alors que les doigts du trait inférieur passent sur le plancher de séchage inférieur après renvoi du convoyeur.

11. Dispositif selon la revendication 7, caractérisé en ce qu'une écluse à roue cellulaire (40) est montée entre le séchoir final (14) et le présécheur (12).

FIG.1

# FIG. 2

FIG.3